# EUROPÄISCHE PATENTSCHRIFT

(11) **EP 3 260 320 B1**
(45) Veröffentlichungstag und Bekanntmachung des Hinweises auf die Patenterteilung: **21.12.2022**
(21) Anmeldenummer: 17174922.9
(22) Anmeldetag: 08.06.2017
(51) Int. Cl.: B60H 1/00

(54) **TECHNIK ZUR STEUERUNG EINER FAHRZEUGFUNKTION**
TECHNOLOGY FOR CONTROLLING A FUNCTION OF A VEHICLE
TECHNIQUE DE COMMANDE D'UNE FONCTION DE VÉHICULE

(30) Priorität: 23.06.2016 DE 102016007701
(43) Veröffentlichungstag der Anmeldung: 27.12.2017
(73) Patentinhaber: MAN Truck & Bus SE, 80995 München (DE)
(72) Erfinder: Arnold, Claus, 93161 Sinzing (DE); Zademach, Martin, 85055 Ingolstadt (DE); Güllich, Johannes, 85229 Markt Indersdorf (DE); Michel, Britta, 81675 München (DE); Wölfel, Christiane, 80337 München (DE); Mohra, Holger, 80805 München (DE)
(74) Vertreter: v. Bezold & Partner Patentanwälte - PartG mbB

(56) Entgegenhaltungen:
- WO-A1-2016/028861
- DE-A1- 19 515 353
- DE-A1- 19 941 948
- DE-A1- 19 944 324
- DE-A1-102007 042 238
- US-A- 5 775 406
- US-A1- 2010 107 070

## Beschreibung

Die vorliegende Erfindung betrifft allgemein eine Technik zur Steuerung einer Fahrzeugfunktion. Insbesondere betrifft die Erfindung eine Vorrichtung zur Zeitsteuerung einer Funktion eines Nutzfahrzeugs an einem Fahrerarbeitsplatz sowie ein Nutzfahrzeug mit dieser Vorrichtung.

Informationssysteme in einem Fahrzeug werden aufgrund stetig wachsender Anzahl von Funktionen immer umfangreicher und entsprechend komplizierter zu bedienen. Einige Fahrzeugfunktionen, wie beispielsweise eine Standheizung, besitzen zudem eine Zeitsteuerung, die ein kontrolliertes Einschalten der Standheizung zu vom Fahrer individuell festgelegten Zeiten ermöglicht. Jedoch ist eine Unterfunktion wie diese Zeitsteuerung in einem umfangreichen Menübaum des Informationssystems oftmals schwer zu finden.

Alternative bestehende Techniken implementieren die Zeitkonfiguration der Standheizung direkt in der Bedieneinheit der Standheizung oder in einer separaten funktionsspezifischen Bedieneinheit. Jedoch sind die Eingabemöglichkeiten und Anzeigemöglichkeiten einer funktionsspezifischen Bedieneinheit eingeschränkt gegenüber einem zentralen Informationssystem. Beispielsweise umfasst die Bedieneinheit der Standheizung keinen Bildschirm oder einen im Vergleich zum zentralen Informationssystem sehr kleinen Bildschirm.

Somit ist bei bestehenden Techniken zur Zeitkonfiguration einer Fahrzeugfunktion das Auffinden eines Untermenüs kompliziert, benutzerunfreundlich, zeitaufwendig und eventuell ablenkend. Zudem muss ein Benutzer zunächst erkennen, ob die Zeitkonfiguration je nach Fahrzeugausführung oder Fahrzeugmodel überhaupt an einem zentralen Informationssystem oder an einer funktionsspezifischen Bedieneinheit einzustellen ist.

Das Dokument DE 199 41 948 A1 beschreibt Anzeige- und Bedieneinheit für eine Standheizung in einem Kraftfahrzeug. Die Anzeigeeinheit dient als Bordmonitor eines multifunktionalen Infotainmentsystems. Weitere Funktionen betreffend Klimaanlage und Radio sind über ein zusammenfassendes Grundmenü anwählbar.

Das Dokument DE 199 44 324 A1 wurde ebenfalls berücksichtigt.

Das Dokument US 2010/0107070 A1 beschreibt ein System, das mittels einer Graphikschnittstelle die Bedienung einer Heizung, einer Lüftung und einer Klimaanlage (HVAC) kombiniert. Die Graphikschnittstelle umfasst beispielsweise eine Wetterkarte, wobei das Aufrufen der Wetterkarte zu einem Wetterbildschirm führt. Die Graphikschnittstelle umfasst auch einen Innenraumfeuchtigkeitsreiter, wobei das Aufrufen des Innenraumfeuchtigkeitsregisters zu einem Feuchtigkeitsbildschirm führt, der zumindest eine aktuelle Innenfeuchtigkeit anzeigt.

Das Dokument WO 2016/028861 beschreibt ein System zum zeitgesteuerten täglichen Start ein Heizung in einem Bus.ss

Das Dokument DE 10 2007 042 238 A1 betrifft eine Fernsteuerung eines Fahrzeugs. Eine Anwendersoftware ermöglicht ein zeitgesteuertes Einschalten einer Alarmanlage.

Somit ist eine Aufgabe der Erfindung, eine Technik zur Zeitkonfiguration einer Funktion des Nutzfahrzeugs bereitzustellen, deren Bedienung weniger Arbeitsschritte erfordert. Eine alternative oder weitere Aufgabe ist, eine Technik zur Zeitkonfiguration der Funktion des Nutzfahrzeugs bereitzustellen, die intuitiv zu bedienen ist.

Diese Aufgabe oder Aufgaben werden durch eine Vorrichtung zur Zeitsteuerung einer Funktion eines Nutzfahrzeugs an einem Fahrerarbeitsplatz mit den Merkmalen des unabhängigen Anspruchs gelöst.

Die Erfindung wird von dem Gegenstand des Vorrichtungsanspruch 1 definiert.

Dadurch, dass das Bedienelement in räumlicher Zuordnung zur Bedieneinheit der Funktion angeordnet ist, kann die Zeitkonfiguration intuitiv aufgefunden und bedient werden. Ein mühevolles und zeitaufwendiges Auffinden eines Untermenüs oder eines Menüpunkts zum Konfigurieren der bestimmten Funktion am Bildschirm kann entfallen. Ausgehend von der Bedieneinheit für die Funktion kann durch Betätigung des Bedienelements direkt zur Konfiguration der Zeitsteuerung gesprungen werden.

Das Bedienelement kann ein Taster sein. Das Bedienelement kann mit einem Zeichen oder Symbol (beispielsweise einem "P") für die Zeitsteuerung beschriftet sein. Das Bedienelement kann auch als Programmiertaste der Bedieneinheit und/oder der Funktion bezeichnet werden.

Das Anzeigen der Benutzerschnittstelle zum Konfigurieren der Zeitsteuerung der Funktion kann durch Betätigung des Bedienelements bewirkt werden. Das Anzeigen kann weiteren Bedingungen unterliegen, beispielsweise einem Stehen des Nutzfahrzeugs oder einem abgeschalteten Motor.

Die Benutzerschnittstelle kann Parameter der Zeitsteuerung anzeigen. Alternativ oder ergänzend kann die Benutzerschnittstelle dazu ausgebildet sein, Parameter der Zeitsteuerung einzugeben und/oder zu ändern. Der Bildschirm kann eine grafische Benutzerschnittstelle umfassen.

Das Anzeigen der Benutzerschnittstelle kann ein Aufrufen und/oder Aktivieren der Benutzerschnittstelle umfassen. Die Benutzerschnittstelle zum Konfigurieren der Zeitsteuerung kann zusätzlich am Bildschirm auswählbar sein oder ausschließlich durch die Betätigung des Bedienelements erreichbar, aufrufbar oder anzeigbar sein.

Das Bedienen der Funktion mittels der Bedieneinheit kann eine gegenwärtige Nutzung der Funktion betreffen. Das Bedienen der Funktion mittels der Bedieneinheit kann die gegenwärtige Nutzung der Funktion auslösen, verändern, steuern und/oder regeln.

Die Zeitsteuerung der Funktion kann eine zukünftige Nutzung der Funktion betreffen. Die Zeitsteuerung kann die zukünftige Nutzung der Funktion auslösen, verändern, steuern und/oder regeln. Das Konfigurieren der Zeitsteuerung kann eine Startzeit, eine Endzeit, eine Zeitdauer, eine Vorlaufzeit, eine Verzögerungszeit und/oder eine Zeitautomatik für die zukünftige Nutzung der Funktion bestimmen. Alternativ oder ergänzend kann die Zeitsteuerung von einer erwarteten Ankunftszeit an einem (beispielsweise durch die Konfiguration bestimmten) Zielort abhängen. Die Konfiguration der Zeitsteuerung kann Zeiten (beispielsweise Uhrzeiten und/oder Wochentage) für den Betrieb oder die Aktivität der Funktion bestimmen. Das Bedienelement kann an der Bedieneinheit angeordnet sein. Das Bedienelement kann dazu ausgebildet sein, ausschließlich das Anzeigen der Benutzerschnittstelle und/oder das Aufrufen der Zeitkonfiguration zu bewirken. Das Bedienelement kann nicht zum Bedienen der Funktion ausgebildet sein.

Der Bildschirm kann von der Bedieneinheit verschieden sein. Der Bildschirm und die Bedieneinheit können verschiedene Module sein. Der Bildschirm und die Bedieneinheit können voneinander beabstandet oder getrennt sein.

Die Bedieneinheit kann Steller umfassen, die zum Bedienen der Funktion ausgebildet sind. Das Bedienelement kann näher an den Stellern für das Bedienen der Funktion angeordnet sein als am Bildschirm.

Der Bildschirm kann dazu ausgebildet sein, ein Steuermenü anzuzeigen. Der Bildschirm kann dazu ausgebildet sein, die Funktion und/oder die weiteren Funktionen auszuwählen. Die Benutzerschnittstelle kann ein Untermenü des Steuermenüs sein. Der Bildschirm kann dazu ausgebildet sein, für mehrere oder jede der Funktionen jeweils ein Untermenü des Steuermenüs als Benutzerschnittstelle zur Konfiguration der jeweiligen Funktion anzuzeigen. Das Anzeigen der Benutzerschnittstelle kann durch die Auswahl der jeweiligen Funktion und/oder die Betätigung des jeweiligen Bedienelements bewirkt werden.

Eine weitere zeitgesteuerte Funktion kann ein Radiowecker sein. Eine weitere Bedieneinheit kann zum Bedienen eine Radios und/oder eines Medienzentrums vorgesehen sein. Die weitere Bedieneinheit kann ein weiteres Bedienelement zur Konfiguration des Radioweckers umfassen. Die Konfiguration des Radioweckers kann eine Weckzeit bestimmen.

Der Bildschirm kann ein Kombinationsinstrument umfassen oder Teil eines Kombinationsinstruments sein. Der Bildschirm kann eine Standardanzeige (z. B. das Kombinationsinstrument) am Fahrerarbeitsplatz, eine Sekundäranzeige (z. B. eine Navigationsanzeige) am Fahrerarbeitsplatz oder eine Anzeige speziell für die Funktion des Nutzfahrzeugs oder für eine Gruppe von Funktionen des Nutzfahrzeugs sein.

Die Funktion kann eine Temperaturregelung umfassen. Die Temperaturregelung kann den Fahrerarbeitsplatz und/oder einen Transportraum des Nutzfahrzeugs betreffen. Der Fahrerarbeitsplatz kann in einem Fahrerhaus des Nutzfahrzeugs angeordnet sein. Die Funktion kann ein Heizen, Lüften und/oder Kühlen des Fahrerhauses umfassen. Die Funktion kann ein System zum Heizen, Lüften und Kühlen (englisch: Heating, Ventilating, and Air Conditioning) oder HVAC-Modul betreffen. Alternativ oder ergänzend kann die Funktion eine Motorheizung umfassen.

Die Funktion kann eine Standheizung umfassen. Die Konfiguration der Zeitsteuerung kann Zeiten für den Betrieb der Standheizung bestimmen. Die Standheizung kann das Fahrerhaus und/oder den Motor (beispielsweise einschließlich einer Ölwanne) des Nutzfahrzeugs erwärmen. Die Konfiguration kann ferner eine Mindesttemperatur bestimmen. Bei, ab und/oder bis zu der bestimmten Zeit kann die Standheizung betrieben werden, beispielsweise wenn eine Ist-Temperatur kleiner als die Mindesttemperatur ist.

Die Funktion kann eine Klimaanlage umfassen. Die Konfiguration der Zeitsteuerung kann Zeiten für den Betrieb der Klimaanlage bestimmen. Die Konfiguration kann ferner eine Höchsttemperatur bestimmen. Bei, ab und/oder bis zu der bestimmten Zeit kann die Klimaanlage betrieben werden, beispielsweise wenn eine Ist-Temperatur größer als die Höchsttemperatur ist.

Das Nutzfahrzeug kann ein Lastkraftwagen (LKW) oder eine Sattelzugmaschine sein. Die Funktion kann einen Laderaum und/oder einen Sattelauflieger betreffen. Die Funktion kann einen Gütertransport, Transportraum und/oder eine Transportfläche betreffen. Die Funktion kann ein Heizen, Lüften und/oder Kühlen (auch: Klimatisierung) des Transportraums umfassen. Beispielsweise kann die Zeitsteuerung die Klimatisierung des Transportraums während der Fahrt und/oder vor Erreichen eines Beladeorts beginnen, damit bei Erreichen des Beladeorts eine Soll-Temperatur im Transportraum herrscht.

Die Bedieneinheit kann ein Stellglied und/oder eine Anzeige zur Steuerung oder Regelung der Funktion umfassen. Die Steuerung oder Regelung kann in der Bedieneinheit integriert sein. Die Regelung kann dazu ausgebildet sein, einen Istwert zu erfassen und die Funktion in Abhängigkeit des erfassten Istwerts zum Erreichen eines Sollwerts zu regeln. Die Bedieneinheit kann zur Eingabe des Sollwerts und/oder zur Anzeige des Istwerts ausgebildet sein. Beispielsweise kann die Bedieneinheit zur Eingabe einer Soll-Temperatur und/oder zur Anzeige einer Ist-Temperatur ausgebildet sein. Die Zeitsteuerung der Funktion kann eine zeitgesteuerte Temperaturregelung des Nutzfahrzeugs umfassen.

Die Bedieneinheit und der Bildschirm können in einem Armaturenbrett oder einer Instrumententafel des Fahrerarbeitsplatzes angeordnet sein. Die Bedieneinheit kann in einer Mittelkonsole des Nutzfahrzeugs und/oder am Armaturenbrett außerhalb des Bildschirms angeordnet ist.

Die Benutzerschnittstelle kann einen Teil einer Fläche des Bildschirms nutzen und/oder (beispielsweise im Fahrbetrieb angezeigte) Bestandteile des Bildschirms überdecken oder ersetzen. Die Benutzerschnittstelle kann aus Sicht eines Fahrersitzes hinter dem Lenkrad angeordnet sein.

Die Benutzerschnittstelle kann eine Eingabe zur Konfiguration der Zeitsteuerung ermöglichen, beispielsweise die Eingabe einer Zeit und/oder eines Sollwerts. Die Eingabe kann in Reaktion auf die angezeigte Benutzerschnittstelle und/oder in Interaktion mit der angezeigten Benutzerschnittstelle erfolgen. Die Eingabe kann am Lenkrad und/oder am Lenkstock angeordneter Bedienelemente nutzen.

Weitere Merkmale und Vorteile der Erfindung werden im Folgenden unter Bezugnahme auf die beigefügten Zeichnungen beschrieben. Es zeigen:
- Figur 1: eine schematische Darstellung einer Vorrichtung zur Zeitsteuerung einer Funktion eines Nutzfahrzeugs an einem Fahrerarbeitsplatz;
- Figur 2: eine schematische Darstellung eines ersten Ausführungsbeispiels der Vorrichtung zur Zeitsteuerung einer Funktion eines Nutzfahrzeugs;
- Figur 3: eine schematische Darstellung eines zweiten Ausführungsbeispiels der Vorrichtung zur Zeitsteuerung einer Funktion eines Nutzfahrzeugs; und
- Figur 4: ein Flussdiagramm für ein Verfahren zur Zeitsteuerung einer Funktion eines Nutzfahrzeugs.

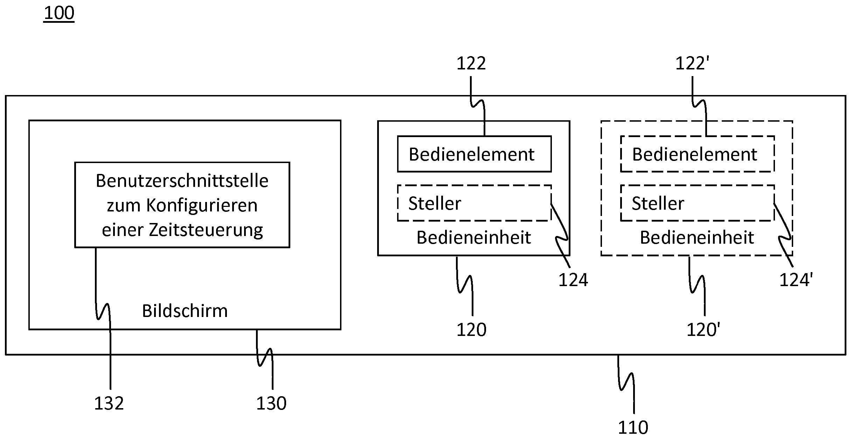

Figur 1 zeigt eine schematische Darstellung eines allgemein mit Bezugszeichen 100 bezeichneten Fahrerarbeitsplatzes mit einer Vorrichtung 110 zur Zeitsteuerung einer Funktion eines Nutzfahrzeugs am Fahrerarbeitsplatz. Die Vorrichtung 110 umfasst mindestens eine Bedieneinheit 120 zum Bedienen jeweils einer Funktion des Nutzfahrzeugs und einen Bildschirm 130 zum Konfigurieren der Zeitsteuerung der Funktion. Dazu ist an der Bedieneinheit 120 ein Bedienelement 122 angeordnet, dessen Betätigung am Bildschirm 130 eine Benutzerschnittstelle 132 anzeigt zum Konfigurieren der Zeitsteuerung jener Funktion, die der jeweiligen Bedieneinheit 120 entspricht.

Optional umfasst die Bedieneinheit 120 einen oder mehrere Stellglieder (oder Steller) 124, an denen Parameter (welche beispielsweise nicht eine Zeitabhängigkeit für die Zeitsteuerung betreffen) für die Funktion festgelegt werden können. Beispielsweise kann die Funktion eine Standheizung betreffen, und am Steller 124 ist eine Temperatur für die Standheizung einstellbar. Alternativ oder ergänzend kann die Funktion einen Radiowecker betreffen, und am Steller 124 ist ein Radiosender einstellbar.

Die Bedieneinheit 120 kann funktionsspezifisch sein, d. h. die Bedienung einer bestimmten Funktion des Nutzfahrzeugs ermöglichen. Die Vorrichtung 110 kann mehrere jeweils funktionsspezifische Bedieneinheiten 120 umfassen, beispielsweise die in Figur 1 gestrichelt gezeichnete weitere Bedieneinheit 120'. Der Bildschirm 130 kann ein multifunktionaler Bildschirm sein. Mittels des multifunktionalen Bildschirms 130 können mindestens zwei der Funktionen konfiguriert werden.

Die Vorrichtung 110 kann mehrere Bedienelemente 122 für mehrere Funktionen des Nutzfahrzeugs umfassen, beispielsweise das in Figur 1 gezeigte weitere Bedienelement 122'. Das Bedienelement 122, mit dem die Konfiguration der Zeitsteuerung am multifunktionalen Bildschirm 130 für eine der Funktionen aufgerufen wird, ist jeweils in räumlicher Zuordnung zur jeweiligen Bedieneinheit 120 der Funktion angeordnet. Beispielsweise umfasst die Bedieneinheit 120 einen Rahmen, innerhalb dessen das Bedienelement 122 angeordnet ist (und optional eine Anzeige und/oder Steller 124).

Das Bedienelement 122 kann ein mechanischer Taster, eine (beispielsweise unbewegliche) berührungsempfindliche Fläche (beispielsweise mit einem kapazitiven Berührungssensor) oder ein Sensor zur Erfassung einer räumlichen Hand- oder Fingerbewegung (beispielsweise mit einem Mikrowellensender und einem Empfänger eines Echosignals der Mikrowellenstrahlung) sein. Der Taster kann auch als Direktwahltaste oder Programmiertaste bezeichnet werden.

Die eine oder mehrere Bedieneinheiten 120 und das jeweils zugehörige Bedienelement 122 sind räumlich getrennt vom Bildschirm 130 angeordnet. Der Abstand zum Bildschirm 130 kann größer sein als ein Abstand zwischen Bedienelement 122 und Steller 124 (bzw. Bedienelement 122' und Steller 124'), die zur selben Funktion gehören.

Nach Aktivierung des Bedienelements 122 erscheint die Benutzerschnittstelle 132 (beispielsweise ein Konfigurationsmenü) am Bildschirm 130. Der Bildschirm 130 kann das Display eines Kombinationsinstruments (beispielsweise zentriert bezüglich einem Fahrersitz), ein Sekundärdisplay (beispielsweise ein auch zur Navigation genutztes Display in der Mittelkonsole) oder ein speziell zur Zeitkonfiguration verschiedener Fahrzeugfunktionen vorgesehener Bildschirm sein.

Optional ist die Aktivierung der Benutzerschnittstelle 132 am Bildschirm 130 mit der Ausgabe eines akustischen Signals ergänzt. Durch das akustische Signal kann der Wechsel von der funktionsspezifischen Bedieneinheit 120 zur grafischen Benutzerschnittstelle 132 am multifunktionalen Bildschirm 130 dem Benutzer (beispielsweise dem Fahrer) akustisch angezeigt werden. Die Benutzerschnittstelle 132 kann eine Eingabemöglichkeit (beispielsweise eine Menüstruktur) aufweisen, in welcher der Benutzer Zeiten für die Zeitsteuerung der Funktion (beispielsweise eine Standheizung) einschließlich zugehöriger Funktionsparameter (beispielsweise einer gewünschten Temperatur) angibt. Alternativ oder ergänzend umfasst die Benutzerschnittstelle 132 eine Eingabemöglichkeit, um eine bereits konfigurierte Zeitsteuerung zu aktivieren und/oder zu deaktiviert, vorzugsweise ohne die zeitlichen und/oder funktionalen Parameter der Konfiguration zu löschen.

Durch das an der funktionsspezifischen Bedieneinheit 120 angeordnete Bedienelement 122 sind das Bedienelement 122 und die zugehörige Funktion, deren Zeitsteuerung durch das Bedienelement 122 eingeleitet wird, für den Benutzer eindeutig und klar ersichtlich miteinander assoziiert.

Nachdem die Zeitsteuerung konfiguriert ist kann die Konfiguration für die Zeitsteuerung (beispielsweise die zeitlichen oder funktionalen Konfigurationsparameter und/oder ein Aktivierungsstatus) in einer Startanzeige am Bildschirm 130 angezeigt werden. Die Startanzeige kann beim Einschalten der Zündung und/oder eines Batteriehauptschalters angezeigt werden.

Alternativ oder ergänzend wird die Konfiguration in einer Anzeige der Bedieneinheit 120 oder einer Fernbedienung des Nutzfahrzeugs angezeigt. Alternativ oder ergänzend ist ein weiteres Bedienelement, welches (wie das oder ähnlich dem Bedienelement 122) das Anzeigen der Benutzerschnittstelle 132 zum Konfigurieren der Zeitsteuerung der Funktion bewirkt, an der Fernbedienung des Nutzfahrzeugs vorgesehen.

Ausführungsbeispiele der Vorrichtung 110 können die Nachteile einer räumlichen Trennung der Bedieneinheit 120 einer bestimmten Funktion und dem Bildschirm 130 zur Zeitkonfiguration mehrerer Funktionen überwinden, indem das Bedienelement 122 zur Einleitung der Konfiguration direkt an der Bedieneinheit 120 angeordnet ist.

Komplizierte und schwer zu durchsuchende Menüstrukturen zur Zeitprogrammierung bestimmter Funktionen des Nutzfahrzeuges können vermieden oder übersprungen werden, indem das funktionsspezifische Bedienelement 122 zu einer Benutzerschnittstelle 132 führt, die zur Konfiguration der Zeitsteuerung genau jener Funktion eingerichtet ist, die an der Bedieneinheit 120 gesteuert oder geregelt wird.

Indem ein multifunktionaler Bildschirm 130 zur Zeitsteuerung mehrerer Funktionen des Nutzfahrzeugs vorgesehen ist, kann der Bildschirm 130 größer sein als dies für einzelne Bildschirme oder Anzeigen an den jeweiligen Bedieneinheiten 120 der Nutzfahrzeugfunktionen möglich oder kosteneffizient wäre.

Zudem ermöglicht die zentrale Konfiguration der Zeitsteuerung am Bildschirm 130 die Verwendung gewohnter Bedienelemente.

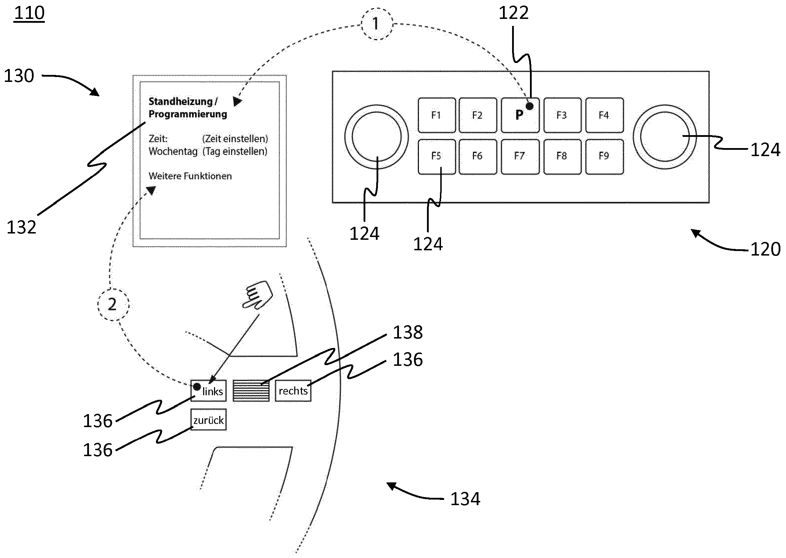

Figur 2 zeigt ein erstes Ausführungsbeispiel der Vorrichtung 110. Übereinstimmende Bezugszeichen bezeichnen Merkmale, die jenen der in der Figur 1 gezeigten Vorrichtung entsprechen oder äquivalent sind. Beim in Figur 2 gezeigten ersten Ausführungsbeispiel der Vorrichtung 110 ist der Bildschirm 130 der Bildschirm eines Kombinationsinstruments am Fahrerarbeitsplatz.

Eine Benutzereingabe zur Konfiguration der Zeitsteuerung in Interaktion mit der am Bildschirm 130 angezeigten Benutzerschnittstelle 132 erfolgt mittels eines Multifunktionslenkrads 134. Das Multifunktionslenkrad 134 umfasst Bedienelemente, wie beispielsweise Taster 136 und eine Drehwalze 138, in einer dem Fahrer zugewandten Fläche des Lenkrads 134. Durch ein Drehen der Drehwalze 138 kann eine Zeit für die Zeitsteuerung ausgewählt werden. Durch ein Drücken der Drehwalze 138 kann die ausgewählte Zeit als zeitlicher Parameter der Konfiguration gesetzt werden.

Die Bedieneinheit 120 ist beispielsweise eine Regelung zur Belüftung, Erwärmung und Kühlung eines Fahrerhauses des Nutzfahrzeugs oder steht mit einer solchen Regelung und/oder einem entsprechenden HVAC-Modul in Signalverbindung. Alternativ oder ergänzend umfasst die Bedieneinheit 120 eine Regelung für eine Standheizung und/oder eine Motorheizung. Durch Aktivieren oder Berühren des Bedienelements 122 ist eine direkte Konfigurationsmöglichkeit der Zeitsteuerung dieser Funktionen unter Mitwirkung des Bildschirms 130 ermöglicht.

Die Benutzerschnittstelle 132 erscheint in grafischer Form (beispielsweise als eine grafische Benutzerschnittstelle oder "Graphical User Interface", GUI) anstatt oder innerhalb einer bestehenden Anzeige am Bildschirm 130, oder indem die bestehende Anzeige ganz oder teilweise überdeckt wird. Beispielsweise ist die Benutzerschnittstelle 132 in ein zusätzliches grafisches Anzeigefenster eingebettet. Falls die letzte Anzeige am Bildschirm 130 vor Betätigung des Bedienelements 122 ausgeblendet ist oder der Bildschirm 130 zum Zeitpunkt der Betätigung des Bedienelements 122 ausgeschaltet ist, erscheint in einer ersten Variante ausschließlich die Benutzerschnittstelle 132 am Bildschirm 130 (beispielsweise als eine eigene Programmierungsanzeige). In einer zweiten Variante wird auch die letzte Anzeige (beispielsweise einschließlich Anzeigen für weitere Funktionen) am Bildschirm 130 teilweise oder vollständig aktiviert.

Die Benutzerschnittstelle 132 am Bildschirm 130 bietet eine Eingabemöglichkeit mittels gewohnter Bedienelemente, beispielsweise am Multifunktionslenkrad 134 mittels der Bedienelemente 136 und 138, oder an einem Lenkstock mittels eines Lenkstockschalters. Diese Bedienelemente zur Eingabe der Konfiguration der Zeitsteuerung können auch zur Aktivierung, Konfiguration oder Steuerung anderer Funktionen des Nutzfahrzeugs, die mittels des Bildschirms 130 dargestellt werden, verwendet werden.

Die Steller 124 an der Bedieneinheit 120 können Drehsteller oder Schalter (beispielsweise Taster) umfassen. Beispielsweise kann an einem Drehsteller 124 der Bedieneinheit 120 für die HVAC-Funktion eine Soll-Temperatur eingestellt werden. Alternativ oder ergänzend können an Tastern 124 voreingestellte Funktionsparameter ausgewählt werden, beispielsweise durch den in Figur 2 gezeigten Taster "F5".

In einer ersten Variante der Vorrichtung 110 sind einzelne oder jeder der Steller 124 zugleich auch ein Bedienelement 122, durch dessen Betätigung die Benutzerschnittstelle 132 zur Konfiguration der Zeitsteuerung angezeigt wird. In einer zweiten Variante ist an der Bedieneinheit 120 das Bedienelement 122 ausschließlich mit der Aktivierung der Benutzerschnittstelle 132 zum Konfigurieren der Zeitsteuerung belegt. Das Bedienelement 122 kann entsprechend beschriftet sein, beispielsweise durch den in Figur 2 gezeigten Buchstaben "P".

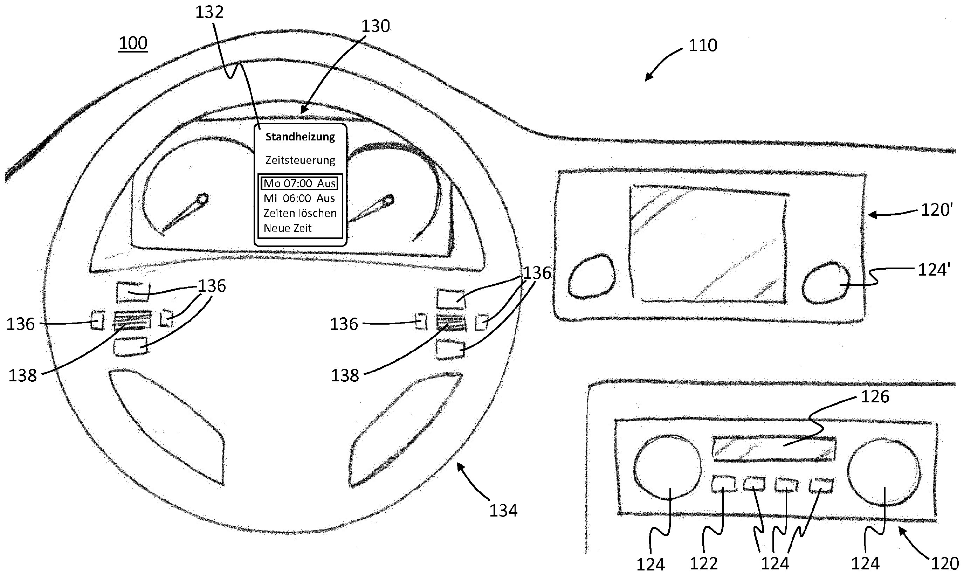

Figur 3 zeigt ein zweites Ausführungsbeispiel einer Vorrichtung 110 zur Zeitsteuerung einer Funktion eines Nutzfahrzeugs an einem Fahrerarbeitsplatz 100. Gleiche Bezugszeichen bezeichnen Merkmale, die denen der Figuren 1 und 2 entsprechen oder äquivalent sind.

Das in Figur 3 gezeigte zweite Ausführungsbeispiel der Vorrichtung 110 ist in einem Lastkraftwagen (LKW) als Nutzfahrzeug implementiert. Die Betätigung des als Programmierungstaste ausgebildeten Bedienelements 122 am Klimabedienteil als Beispiel für die Bedieneinheit 120 führt direkt zur Anzeige der Benutzerschnittstelle 132 im Kombinationsinstrument als Beispiel für den Bildschirm 130. Dort kann der Fahrer Voreinstellungen für Heizzeiten und Wochentage für die Standheizung vornehmen und löschen.

In einer Anzeige 126 der Bedieneinheit 120 werden vorzugsweise nur Symbole angezeigt, welche die aktuellen Funktionsparameter (beispielsweise ein aktueller Status aller oder einzelner Klimafunktionen) angeben. Dadurch kann die Heizfunktion mit der Bedieneinheit 120 assoziiert sein, indem die Funktionsparameter zur momentanen Nutzung mittels der Steller 124 eingestellt werden und/oder die aktuellen Funktionsparameter an der Bedieneinheit 120 angezeigt wird. Dagegen werden zukünftige oder vorprogrammierte Funktionsparameter, welche die Zeitsteuerung der nämlichen Funktion betreffen, mittels des Bildschirms 130 angezeigt und/oder mittels der über das Bedienelement 122 direkt erreichbaren Benutzerschnittstelle 132 am Bildschirm 130 eingestellt.

Während die Benutzerschnittstelle 132 eine grafische Anzeige am Bildschirm 130 umfasst, kann die Benutzerschnittstelle 132 auch die Eingabemöglichkeiten zur Konfiguration der Zeitsteuerung umfassen. Alternativ oder ergänzend zu den Eingabemöglichkeiten der mechanischen Bedienelemente 136 und 138 kann die Konfiguration der Zeitsteuerung durch Gestensteuerung erfolgen.

Der Bildschirm 130 kann zum Konfigurieren der Zeitsteuerung einer weiteren Funktion, beispielsweise eines Radioweckers, ausgebildet sein. Das Radio als eine weitere Funktion kann durch die in Figur 3 gezeigte weitere Bedieneinheit 120' bedient werden. An der weiteren Bedieneinheit 120' kann zur Zeitkonfiguration ein Bedienelement angeordnet sein, das die Anzeige einer für die weitere Funktion spezifischen Benutzerschnittstelle am Bildschirm 130 bewirkt.

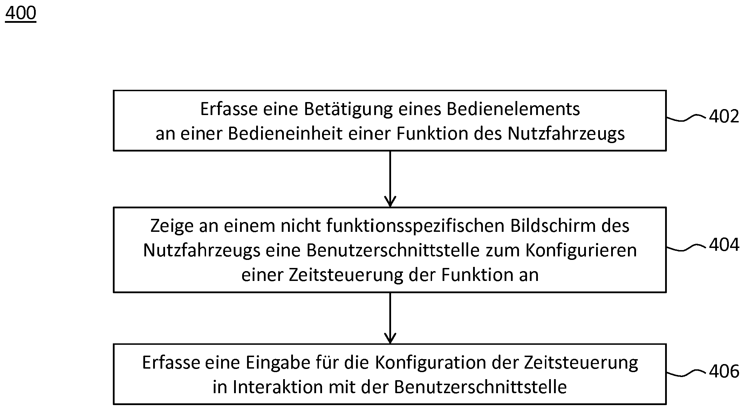

Figur 4 zeigt ein Flussdiagramm eines Verfahrens 400 zur Zeitsteuerung einer Funktion eines Nutzfahrzeugs. Das Verfahren 400 kann durch die Vorrichtung 110 implementiert sein.

In einem Schritt 402 erfasst die Vorrichtung 110, beispielsweise die Bedieneinheit 120, eine Betätigung eines Bedienelements 122 an der Bedieneinheit 120. Die Betätigung des Bedienelements 122 ist mit einer Funktion des Nutzfahrzeugs assoziiert. In Reaktion auf die erfasste Betätigung zeigt, in einem Schritt 404, die Vorrichtung 110 an einem multifunktionalen Bildschirm des Nutzfahrzeugs, beispielsweise dem Bildschirm 130, eine Benutzerschnittstelle 132 zum Konfigurieren einer Zeitsteuerung der assoziierten Funktion an. In einem Schritt 406 des Verfahrens 400 erfasst die Vorrichtung 110 eine Eingabe für die Konfiguration der Zeitsteuerung in Interaktion mit der am Bildschirm 130 angezeigten Benutzerschnittstelle 132.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Fahrerarbeitsplatz
- 110: Vorrichtung zur Zeitsteuerung einer Funktion eines Nutzfahrzeugs
- 120, 120': Bedieneinheit der Funktion
- 122, 122': Bedienelement zum Anzeigen einer Benutzerschnittstelle
- 124, 124': Steller der Bedieneinheit
- 126: Anzeige der Bedieneinheit
- 130: Bildschirm
- 132: Benutzerschnittstelle zum Konfigurieren der Zeitsteuerung der Funktion
- 134: Multifunktionslenkrad
- 136: Taster des Multifunktionslenkrads
- 138: Drehwalze des Multifunktionslenkrads
- 400: Verfahren zur Zeitsteuerung einer Funktion eines Nutzfahrzeugs
- 402: Schritt des Erfassens einer Betätigung am Bedienelement
- 404: Schritt des Anzeigens einer Benutzerschnittstelle
- 406: Erfassen einer Eingabe zur Konfiguration

## Patentansprüche

1. Vorrichtung (110) zur Zeitsteuerung einer Funktion eines Nutzfahrzeugs an einem Fahrerarbeitsplatz (100), umfassend:
eine Bedieneinheit (120) zum Bedienen der Funktion am Fahrerarbeitsplatz; und
einen Bildschirm (130) zum Konfigurieren der Zeitsteuerung der Funktion, und
ein an der Bedieneinheit angeordnetes Bedienelement (122), das dazu ausgebildet ist, am Bildschirm (130) das Anzeigen einer Benutzerschnittstelle (132) zum Konfigurieren der Zeitsteuerung der Funktion zu bewirken,
wobei das Bedienelement (122) ausgebildet ist, ausschließlich das Anzeigen der Benutzerschnittstelle (132) zu bewirken,
wobei der Bildschirm (130) zum Konfigurieren weiterer Funktionen des Nutzfahrzeugs ausgebildet ist,
wobei die Vorrichtung ferner eine weitere Bedieneinheit (120') für jede der weiteren Funktionen umfasst, wobei jede der Bedieneinheiten jeweils ein Bedienelement umfasst, das dazu ausgebildet ist, am Bildschirm (130) das Anzeigen einer Benutzerschnittstelle zum Konfigurieren der jeweiligen Funktionen des Nutzfahrzeugs zu bewirken, und wobei die Bedieneinheiten (120, 120') und der Bildschirm (130) voneinander beabstandet sind.

2. Vorrichtung nach Anspruch 1, wobei das Bedienelement (122) an der Bedieneinheit (120) einen Taster umfasst, der ausschließlich das Anzeigen der Benutzerschnittstelle (132) bewirkt.

3. Vorrichtung nach Anspruch 1 oder 2, wobei der Bildschirm dazu ausgebildet ist, für jede der Funktionen jeweils eine Benutzerschnittstelle (132) anzuzeigen.

4. Vorrichtung nach einem der vorhergehenden Ansprüche, wobei der Bildschirm (130) ein Kombinationsinstrument umfasst.

5. Vorrichtung nach einem der vorhergehenden Ansprüche, wobei der Fahrerarbeitsplatz (100) in einem Fahrerhaus des Nutzfahrzeugs angeordnet ist, und die Funktion das Heizen, Lüften und/oder Kühlen des Fahrerhauses umfasst.

6. Vorrichtung nach einem der vorhergehenden Ansprüche, wobei die Funktion eine Standheizung umfasst und die Konfiguration der Zeitsteuerung eine Zeit (133) für den Betrieb der Standheizung bestimmt.

7. Vorrichtung nach einem der vorhergehenden Ansprüche, wobei die Funktion eine Klimaanlage umfasst und die Konfiguration der Zeitsteuerung eine Zeit (133) für den Betrieb der Klimaanlage bestimmt.

8. Vorrichtung nach einem der vorhergehenden Ansprüche, wobei das Nutzfahrzeug ein Lastkraftwagen oder eine Sattelzugmaschine ist, und die Funktion einen Laderaum oder einen Sattelauflieger betrifft.

9. Vorrichtung nach einem der vorhergehenden Ansprüche, wobei die Bedieneinheit (120) ein Stellglied (124) und/oder eine Anzeige (126) zur Steuerung oder Regelung der Funktion umfasst.

10. Vorrichtung nach einem der vorhergehenden Ansprüche, ferner eine Regelung umfassend, die dazu ausgebildet ist, einen Istwert zu erfassen und die Funktion in Abhängigkeit des erfassten Istwerts zum Erreichen eines Sollwert zu regeln.

11. Vorrichtung nach Anspruch 10, wobei die Bedieneinheit (120) und/oder die Benutzerschnittstelle (132) zur Eingabe des Sollwerts und/oder zur Anzeige des Istwerts ausgebildet ist.

12. Vorrichtung nach einem der vorhergehenden Ansprüche, wobei die Bedieneinheit (120) in einer Mittelkonsole des Nutzfahrzeugs und/oder am Armaturenbrett außerhalb des Bildschirms (130) angeordnet ist.

13. Nutzfahrzeug mit einer Vorrichtung (110) nach einem der vorhergehenden Ansprüche.

## Claims

1. An apparatus (110) for controlling the timing of a function of a commercial vehicle in a cockpit (100), comprising:
an operating unit (120) for operating the function in the cockpit; and
a screen (130) for configuring the timing control for the function, and
an operating element (122), arranged on the operating unit, that is designed to cause a user interface (132) for configuring the timing control for the function to be displayed on the screen (130),
wherein the operating element (122) is designed to exclusively cause the user interface (132) to be displayed,
wherein the screen (130) is designed to configure further functions of the commercial vehicle,
wherein the apparatus further comprises a further operating unit (120') for each of the further functions, each of the operating units comprising a respective operating element designed to cause a user interface for configuring the respective functions of the commercial vehicle to be displayed on the screen (130), and wherein the operating units (120, 120') and the screen (130) are at a distance from one another.

2. The apparatus according to Claim 1, wherein the operating element (122) on the operating unit (120) comprises a pushbutton switch that exclusively causes the user interface (132) to be displayed.

3. The apparatus according to Claim 1 or 2, wherein the screen is designed to display a respective user interface (132) for each of the functions.

4. The apparatus according to one of the preceding claims, wherein the screen (130) comprises a combination instrument.

5. The apparatus according to one of the preceding claims, wherein the cockpit (100) is arranged in a driver's cab of the commercial vehicle, and the function comprises heating, ventilating and/or cooling the driver's cab.

6. The apparatus according to one of the preceding claims, wherein the function comprises auxiliary heating and the configuration of the timing control determines a time (133) for operation of the auxiliary heating.

7. The apparatus according to one of the preceding claims, wherein the function comprises an air-conditioning system and the configuration of the timing control determines a time (133) for operation of the air-conditioning system.

8. The apparatus according to one of the preceding claims, wherein the commercial vehicle is a heavy goods vehicle or a tractor unit, and the function relates to a cargo space or a semitrailer.

9. The apparatus according to one of the preceding claims, wherein the operating unit (120) comprises an actuating element (124) and/or a display (126) for controlling or regulating the function.

10. The apparatus according to one of the preceding claims, further comprising a closed-loop control system designed to record an actual value and to control the function on the basis of the recorded actual value to achieve a setpoint value.

11. The apparatus according to Claim 10, wherein the operating unit (120) and/or the user interface (132) is designed for inputting the setpoint value and/or for displaying the actual value.

12. The apparatus according to one of the preceding claims, wherein the operating unit (120) is arranged in a centre console of the commercial vehicle and/or on the dashboard outside the screen (130).

13. A commercial vehicle having an apparatus (110) according to one of the preceding claims.

## Revendications

1. Dispositif (110) de commande temporisée d'une fonction d'un véhicule utilitaire au niveau d'un poste de travail de conducteur (100), comprenant :
une unité d'actionnement (120) pour actionner la fonction au niveau du poste de travail de conducteur ; et
un écran (130) pour configurer la commande temporisée de la fonction, et
un élément d'actionnement (122) disposé au niveau de l'unité d'actionnement et qui est réalisé pour provoquer à l'écran (130) l'affichage d'une interface utilisateur (132) pour configurer la commande temporisée de la fonction,
l'élément d'actionnement (122) étant réalisé pour provoquer uniquement l'affichage de l'interface utilisateur (132),
l'écran (130) étant réalisé pour configurer d'autres fonctions du véhicule utilitaire,
dans lequel le dispositif comprend en outre une autre unité d'actionnement (120') pour chacune des autres fonctions, chacune des unités d'actionnement comprenant respectivement un élément d'actionnement qui est réalisé pour provoquer à l'écran (130) l'affichage d'une interface utilisateur pour configurer les fonctions respectives du véhicule utilitaire, et dans lequel les unités d'actionnement (120, 120') et l'écran (130) sont espacés les uns des autres.

2. Dispositif selon la revendication 1, dans lequel l'élément d'actionnement (122) comprend sur l'unité d'actionnement (120) un bouton-poussoir qui provoque exclusivement l'affichage de l'interface utilisateur (132).

3. Dispositif selon la revendication 1 ou 2, dans lequel l'écran est réalisé pour afficher pour chacune des fonctions respectivement une interface utilisateur (132).

4. Dispositif selon l'une quelconque des revendications précédentes, dans lequel l'écran (130) comprend un instrument combiné.

5. Dispositif selon l'une quelconque des revendications précédentes, dans lequel le poste de travail de conducteur (100) est disposé dans une cabine de conducteur du véhicule utilitaire, et la fonction comprend le chauffage, la ventilation et/ou le refroidissement de la cabine de conducteur.

6. Dispositif selon l'une quelconque des revendications précédentes, dans lequel la fonction comprend un chauffage auxiliaire, et la configuration de la commande temporisée détermine une heure (133) pour le fonctionnement du chauffage auxiliaire.

7. Dispositif selon l'une quelconque des revendications précédentes, dans lequel la fonction comprend un climatiseur, et la configuration de la commande temporisée détermine une heure (133) pour le fonctionnement du climatiseur.

8. Dispositif selon l'une quelconque des revendications précédentes, dans lequel le véhicule utilitaire est un poids lourd ou un tracteur de semi-remorque, et la fonction concerne un compartiment à marchandises ou une semi-remorque.

9. Dispositif selon l'une quelconque des revendications précédentes, dans lequel l'unité d'actionnement (120) comprend un actionneur (124) et/ou un affichage (126) pour la commande ou la régulation de la fonction.

10. Dispositif selon l'une quelconque des revendications précédentes, comprenant en outre une régulation qui est réalisée pour détecter une valeur réelle et pour réguler la fonction en fonction de la valeur réelle détectée afin d'atteindre une valeur de consigne.

11. Dispositif selon la revendication 10, dans lequel l'unité d'actionnement (120) et/ou l'interface utilisateur (132) sont réalisées pour entrer la valeur de consigne et/ou pour afficher la valeur réelle.

12. Dispositif selon l'une quelconque des revendications précédentes, dans lequel l'unité d'actionnement (120) est disposée dans une console centrale du véhicule utilitaire et/ou sur le tableau de bord en dehors de l'écran (130).

13. Véhicule utilitaire, comprenant un dispositif (110) selon l'une quelconque des revendications précédentes.
